# EUROPÄISCHE PATENTSCHRIFT

(11) **EP 2 012 956 B1**
(45) Veröffentlichungstag und Bekanntmachung des Hinweises auf die Patenterteilung: **15.07.2009**
(21) Anmeldenummer: 07724676.7
(22) Anmeldetag: 27.04.2007
(51) Int. Cl.: B23B 31/117, B23B 31/30, B23Q 3/06, B23Q 3/12

(54) **JUSTIERBARES SPANNELEMENT**
ADJUSTABLE TENSIONING ELEMENT
ÉLÉMENT DE SERRAGE AJUSTABLE

(30) Priorität: 27.04.2006 DE 102006020274
(43) Veröffentlichungstag der Anmeldung: 14.01.2009
(73) Patentinhaber: Hirschmann Gmbh, 78737 Fluorn-Winzeln (DE)
(72) Erfinder: WEISSER, Norbert, 78737 Fluorn-Winzeln (DE)
(74) Vertreter: Göhring, Robert
(86) Internationale Anmeldenummer: PCT/EP2007/003748
(87) Internationale Veröffentlichungsnummer: WO 2007/124928

(56) Entgegenhaltungen:
- EP-A1- 1 057 589
- GB-A- 1 451 391
- JP-A- 2003 181 742

## Beschreibung

Die Erfindung betrifft ein justierbaren Spannelement mit Lamellen, zum Positionieren eines Werkzeuges oder Werkstückes an einer Werkzeugmaschine, insbesondere zur Aufnahme von Werkstücken für Draht- und/oder Senkerodiermaschinen und insbesondere zur Rundlaufjustage von rotierenden bzw. drehenden Werkstücken.
Eine solche Vorrichtung ist z.B. aus JP 2003 181742 A bekamt.
Mit derartigen Vorrichtungen können zum Beispiel Werkstücke sehr exakt und mit hoher Wiederholgenauigkeit an Draht- und/oder Senkerodiermaschinen positioniert und befestigt werden. Dabei sind nicht nur eine sehr präzise, sondern auch eine sehr schnelle Aufnahme der Werkstücke, also kurze Rüstzeiten Voraussetzung für einen wirtschaftlichen Fertigungsablauf. Die erwünschte Wiederholgenauigkeit bei der Aufnahme von Werkstücken und deren kraftschlüssiger Fixierung liegt dabei typischerweise im Bereich von wenigen Tausendstel Mil-limetern.

Besondere Anforderungen werden dabei an den Planlauf beziehungsweise die Rundlaufgenauigkeit der Spannvorrichtung bei der Rotation der zu bearbeitenden Werkstücke und der exakten Ausrichtung der Werkstücke auf der Achse der Rotation durch die Spannvorrichtung gestellt. Diese Anforderungen an die Genauigkeit sind dabei nochmals erhöht bei der Bearbeitung von kleinsten Werkstücken, beispielsweise aus dem Bereich der Mikromechanik, wo rotationssymmetrische Teile mit kleinsten Durchmessern, typischerweise im Bereich von 0,05 mm oder darunter mit den entsprechenden Toleranzen im Bereich von wenigen Zehnteln Mikrometern gefertigt werden müssen. Nachteilig wirkt sich dabei aus, dass Spannvorrichtungen, die fertigungsbedingt die oben genannten Genauigkeiten bezüglich Planlauf, Rundlauf und axialer Ausrichtung der aufgenommenen Werkstücke zur Verfügung stellen, einen hohen konstruktiven und fertigungstechnischen Aufwand erfordern und in der Herstellung daher äußerst kostenintensiv sind.

Es ist das Ziel der vorliegenden Erfindung, eine Spannvorrichtung und eine Aufnahme für diese Spannvorrichtung zur Verfügung zu stellen, die sowohl eine hohe Genauigkeit bei Planlauf und damit Rundlaufgenauigkeit der Spannvorrichtung selbst sowie eine hohe Genauigkeit bei der Positionierung des Werkstücks auf und entlang der Achse der Rotierspindel einer Draht- und/oder Senkerodiermaschine aufweist und die die oben genannten Nachteile nicht aufweist.

Insbesondere soll eine hoch präzise und sicher reproduzierbare Ausrichtung zwischen der Spannvorrichtung und der Aufnahme der Spannvorrichtung an der Maschine sowie zwischen dem zu bearbeitenden Werkstück und der Spannvorrichtung gewährleistet werden.

Die Aufgabe wird gelöst durch eine Vorrichtung, die die Merkmale des Anspruchs 1 aufweist.

Vorteilhafte Ausgestaltungsformen der erfindungsgemäßen Vorrichtung sind mit den Merkmalen der Unteransprüche beschrieben.

Die vorteilhafte Wirkung der Erfindung ergibt sich durch die Ausgestaltung einer ersten Aufnahme eines Spannelements zur Aufnahme des zu bearbeitenden Werkstücks und die Ausgestaltung einer zweiten, getrennten Aufnahme zur Aufnahme dieses Spannelements an der Maschine beziehungsweise deren Rotationsspindel, wobei sich diese beiden Aufnahmen getrennt und unabhängig voneinander justieren lassen.

Weitere Vorteile können sich auch daraus ergeben, wenn die Aufnahme für das Werkstück im Spannelement und die Aufnahme für das Spannelement an der Maschine so ausgestaltet sind, dass sich sowohl die erwünschte präzise Ausrichtung des Werkstücks wie auch die erwünschte präzise Ausrichtung des Spannelements durch geeignete Vorrichtungen zur Justierung an diesem Spannelement und an der Aufnahme für dieses Spannelement ausführen lassen, ohne dass das Spannelement selbst und seine Aufnahme an der Maschine beziehungsweise die Vorrichtungen zur Justierung mit hohem konstruktiven und fertigungstechnischem Aufwand gefertigt sein müssen, wodurch sich eine gegenüber dem Stand der Technik kostengünstigere Herstellung hoch präziser Spannvorrichtungen erreichen lässt.

Die Erfindung wird nachfolgend anhand der in den Figuren der Zeichnung dargestellten Ausführungsbeispiele näher erläutert, wobei gleiche Elemente mit gleichen Bezugszeichen versehen sind. Es zeigt:
- Fig. 1: eine perspektivische Ansicht des justierbaren Spannelements und des Aufnahmetellers,
- Fig. 2: einen Querschnitt des justierbaren Spannelements und des Aufnahmetellers,
- Fig. 3: eine Draufsicht auf das justierbare Spannelement mit Bezeichnung einer Schnittebene A-A und einen zugehörigen Längsschnitt A-A sowie eine Seitenansicht des justierbaren Spannelements,
- Fig. 4: einen Querschnitt einer weiteren Ausführungsform des justierbaren Spannelements,
- Fig. 5: eine Draufsicht auf das justierbare Spannelement und den Aufnahmeteller mit Bezeichnung einer Schnittebene B-B,
- Fig. 6: einen Längsschnitt des justierbaren Spannelements und des Aufnahmetellers entlang der Schnittebene B-B,
- Fig. 7: eine Draufsicht auf das justierbare Spannelement und den Aufnahmeteller mit Bezeichnung einer Schnittebene C-C und

- Fig. 8: einen Längsschnitt des justierbaren Spannelements und des Aufnahmetellers entlang der Schnittebene C-C.

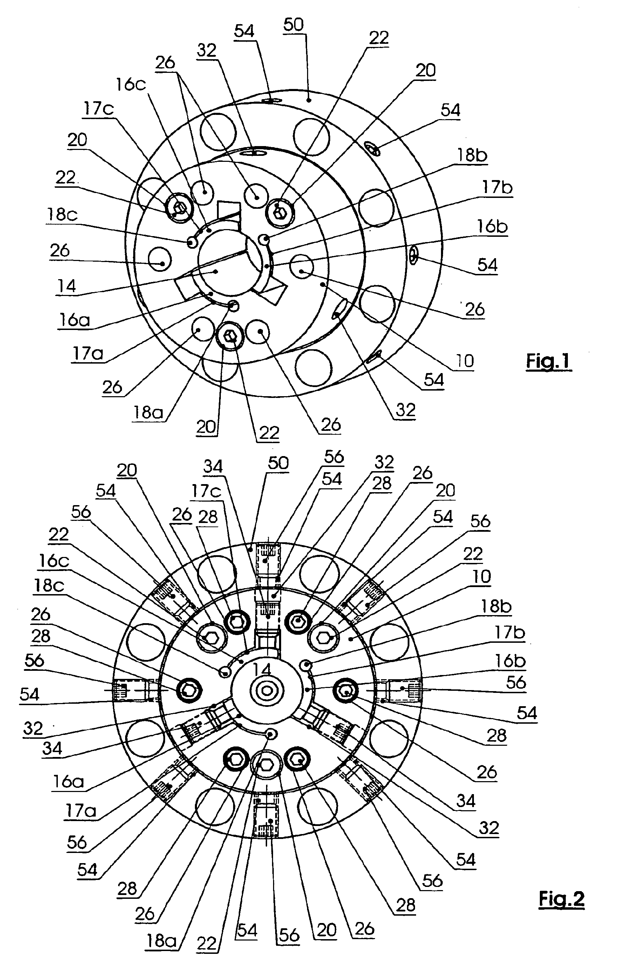

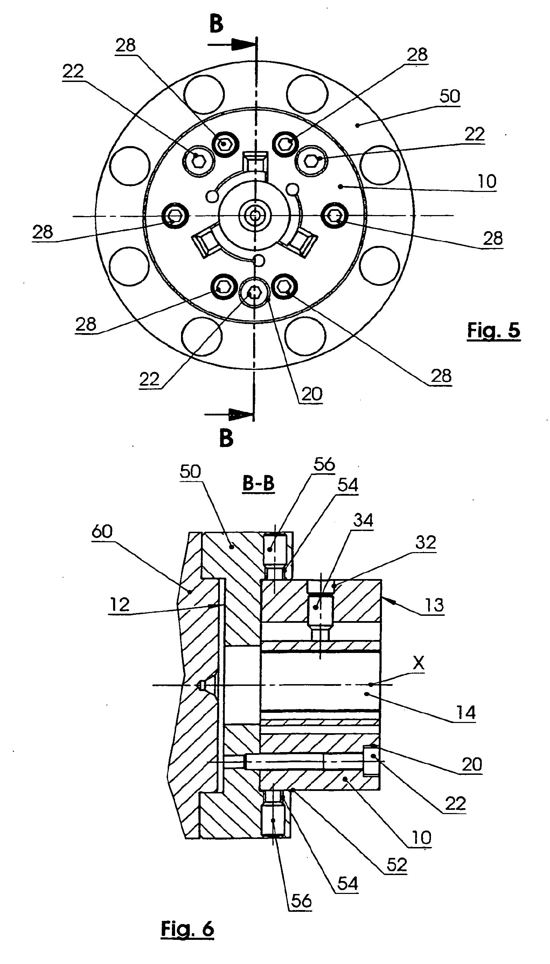

Die perspektivische Ansicht des justierbaren Spannelements und des Aufnahmetellers gemäß Fig.1 umfasst ein als zylindrischen Grundkörper ausgeformtes Spannelement 10 und einen Aufnahmeteller 50, eine rotierende Welle einer Rotierspindel 60 (vgl. Fig.6) aufgesetzt wird. Dabei umfasst das Spannelement 10 drei Radialbohrungen 32, von denen eine auf Grund der perspektivischen Darstellung in Fig.1 nicht ersichtlich ist (siehe dazu Fig.2). Weiterhin umfasst das Spannelement 10 drei Befestigungsbohrungen 20. zur Aufnahme von drei Befestigungsschrauben 22 sowie sechs Justierbohrungen 26, wobei die Befestigungsbohrungen 20 und die Justierbohrungen 26 kreisförmig um die Drehachse des Spannelements 10 herum angeordnet sind.

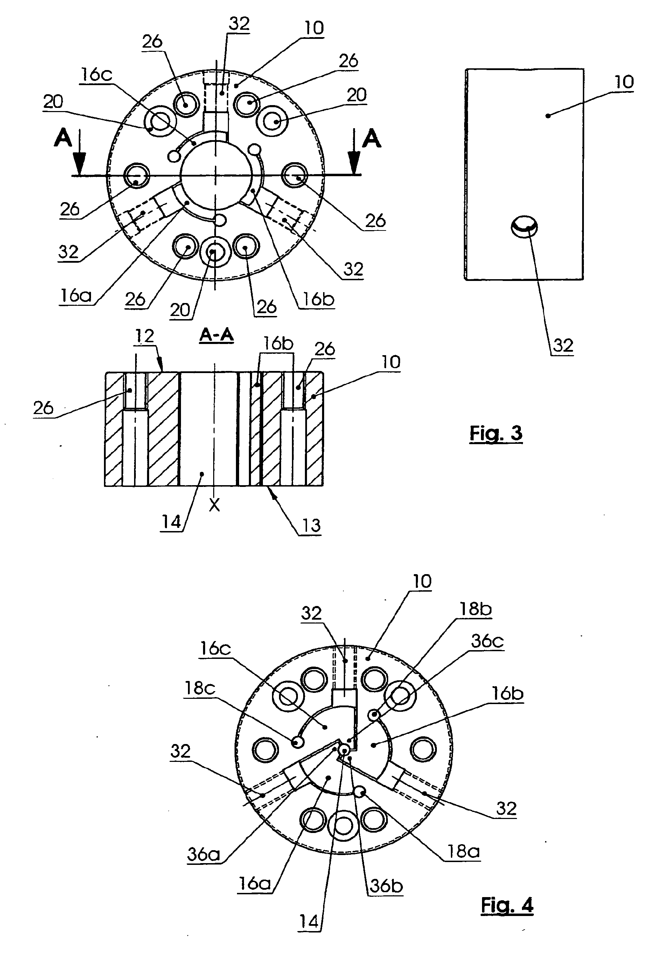

Ebenfalls umfasst das Spannelement 10 gemäß Fig.1 weiterhin eine erste Justierlamelle 16a, eine zweite Justierlamelle 16b und eine dritte Justierlamelle 16c, die im Querschnitt gesehen ringsegmentförmig ausgebildet sind (siehe auch Fig.2) und zum Grundkörper des Spannelements 10 jeweils einen entsprechenden ersten Schlitz 17a, einen entsprechenden zweiten Schlitz 17b und einen entsprechenden dritten Schlitz 17c ausbilden. Dabei gehen der erste Schlitz 17a, der zweite Schlitz 17b und der dritte Schlitz 17c jeweils von einer entsprechenden ersten kreisrunden Öffnung 18a, einer entsprechenden zweiten kreisrunden Öffnung 18b und einer entsprechenden dritten kreisrunden Öffnung 18c aus. Weiterhin umfasst das Spannelement 10 gemäß Fig.1 eine konzentrisch zur Drehachse X (siehe Fig.3, Fig.6 und Fig.8) der Rotierspindel 60 angeordnete Durchgangsbohrung 14 und der Aufnahmeteller 50 umfasst acht, aus der perspektivischen Darstellung gemäß Fig.1 nur teilweise ersichtliche Radialbohrungen 54.

Fig.2 zeigt eine Querschnittsdarstellung der Anordnung aus Spannelement 10 und Aufnahmeteller 50. Zusätzlich zu den bereits in Fig.1 dargestellten Elementen umfasst das Spannelement 10 gemäß Fig. 2 sechs Justierschrauben 28, die von den bereits aus Fig.1 ersichtlichen sechs Justierbohrungen 26 aufgenommen werden. Ebenfalls zusätzlich zu den bereits in Fig.1 dargestellten Elementen umfasst das Spannelement gemäß Fig.2 drei Justierschrauben 34, die von den bereits aus Fig.1 ersichtlichen drei Justierbohrungen 32 aufgenommen werden. Zusätzlich zu den bereits in Fig.1 dargestellten Elementen umfasst der Aufnahmeteller 50 gemäß Fig.2 acht Justierschrauben 56, die von den bereits aus Fig.1 ersichtlichen acht .Radialbohrungen 54 aufgenommen werden.

Die die Präzision der späteren Fertigung von eingespannten Werkstücken wesentlich beeinflussende Präzision der Aufnahme und Ausrichtung des Spannelements 10 auf der Rotierspindel 60 wird durch zwei Parameter maßgeblich beeinflusst. Diese Parameter sind zum einen die Genauigkeit des Planlaufs des Spannelements 10, das heißt die Genauigkeit mit der die Drehachse des Spannelements 10, also die Achse der Durchgangsbohrung 14 die gleiche Ausrichtung aufweist wie die Achse X der Rotationsspindel 60, zum anderen die Genauigkeit des Rundlaufs, das heißt die Genauigkeit mit der die Drehachse des Spannelements 10 auf der Achse X der Rotationsspindel 60 liegt, also möglichst geringen axialen Versatz aufweist.

Dabei kann bei unzureichender Justierung zwar die Ausrichtung der Drehachse des Spannelements 10 exakt mit der Ausrichtung der Drehachse X der Rotationsspindel übereinstimmen, also optimalen Planlauf einer zur Drehachse X rechtwinklig ausgerichteten, planen Oberfläche aufweisen, gleichzeitig kann jedoch eine axialer Versatz der beiden Drehachsen bestehen, wodurch kein optimaler Rundlauf gewährleistet wäre ("Höhenschlag"). Auch die umgekehrte Situation, also weitgehend optimaler Rundlauf bei gleichzeitiger Verkippung der Drehachsen zueinander ist möglich. In der tatsächlichen Anwendung werden daher immer beide Ausrichtungen, gegebenenfalls in sich abwechselnden Arbeitsschritten optimiert, um zu den erwünschten Genauigkeiten für Planlauf und Rundlauf zu gelangen.

Dabei dienen die acht Justierschrauben 56 erfindungsgemäß zur axialen Justierung des Spannelements 10 auf der Rotierspindel 60. Dies bedeutet, dass durch entsprechende Justierung der acht in den Radialbohrungen 54 geführten Justierschrauben 56 die Achse der Durchgangsbohrung 14 exakt auf der Achse X der Rotierspindel 60 ausgerichtet werden kann und somit die Rundlaufgenauigkeit des Spannelements 10 in Bezug auf axialen Versatz optimiert. Jede der acht Justierschrauben 56 stützt sich dabei bedingt durch die radiale Ausrichtung der Bohrungen 54 senkrecht auf der äußeren Oberfläche des als zylindrischen Grundkörper 10 ausgeformten Spannelements ab.

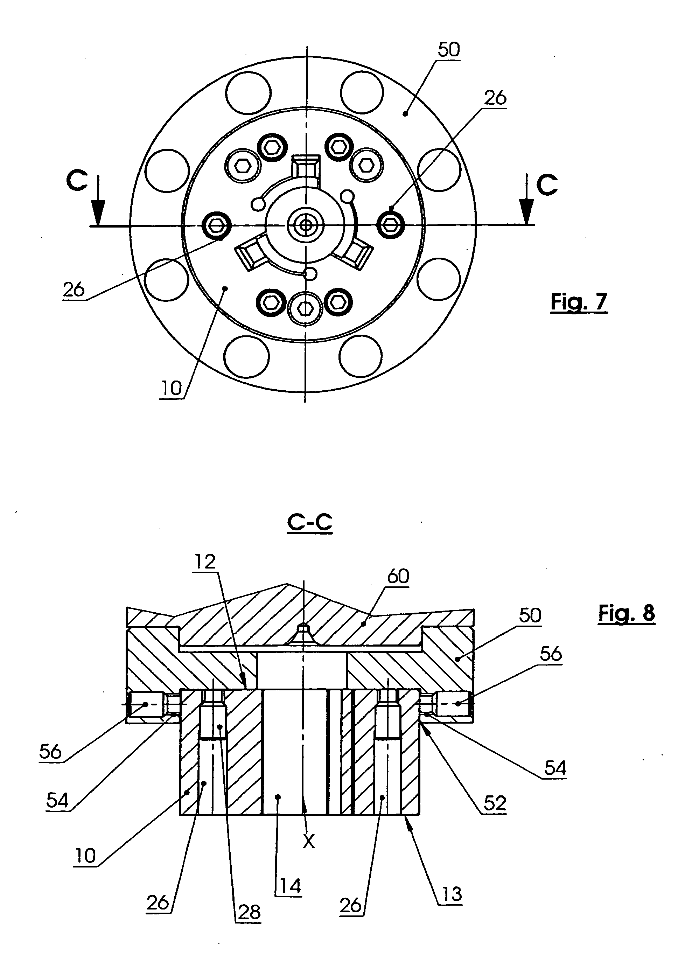

Dabei ermöglicht die verhältnismäßig große Anzahl der unabhängig voneinander justierbaren Justierschrauben 56 eine sehr hohe Präzision bei der Ausrichtung auf die Achse X der Rotierspindel 60. Der erwünschte Planlauf des Spannelements 10, wird durch eine möglichst weitgehende Minimierung der Verkippung der Drehachse der Durchgangsbohrung 14 für die Aufnahme eines Werkstücks im Spannelement 10 gegenüber der Achse X der Rotierspindel 60 wird durch die Justierung der weiter unten im Detail beschriebenen, unabhängig voneinander justierbaren Justierschrauben 28 erreicht. Wie weiter oben beschrieben, wird eine tatsächliche Justierung des Spannelements 10 idealer Weise unter gleichzeitiger oder abwechselnder Justierung der radial ausgerichteten Justierschrauben 56 und der axial ausgerichteten Justierschrauben 28 (siehe zum Beispiel Fig. 8) erreicht. Der Aufnahmeteller 50 wird hierfür auf der Spindel 60 befestigt. Die Korrektur der Planlaufes des Grundkörpers 10 der Spannelements wird durch die Schrauben 28 vorgenommen. Die Kontaktflächen von Annahmeteller 50 und Spindel 60 sind plattgeschliffen. Somit wird die plane Auflage von beiden Teilen gewährleistet.

Neben der Präzision der Aufnahme und Ausrichtung des Spannelements 10 auf der Rotierspindel 60 wird die Präzision der späteren Fertigung von eingespannten Werkstücken weiterhin wesentlich von der Genauigkeit der Ausrichtung bei der Aufnahme des Werkstücks in diesem Spannelement 10 selbst beeinflusst.

Zur kraftschlüssigen Fixierung des zu bearbeitenden Werkstücks im Spannelement 10 werden die aus Fig.1 und Fig.2 zu ersehenden, erfindungsgemäßen ersten, zweiten und dritten Justierlamellen 16a, 16b und 16c zur Verfügung gestellt. Dabei sind diese Justierlamellen in der in Fig.1 und Fig.2 gezeigten Ausführungsform für die Aufnahme von rotationssymmetrischen Werkstücken vorgesehen, deren Durchmesser bei oder geringfügig unterhalb des Durchmessers der Durchgangsbohrung 14 des Spannelements 10 liegt. Weitere Ausführungsformen des Spannelements 10 mit modifizierten Justierlamellen zur zuverlässigen und kraftschlüssigen Aufnahme von rotationssymmetrischen Werkstücken geringerer Durchmesser werden weiter unten beschrieben.

Der durch die erste Justierlamelle 16a, die zweite Justierlamelle 16b und die dritte Justierlamelle 16c zum Grundkörper des Spannelements 10 jeweils entsprechend ausgebildete erste Schlitz 17a, zweite Schlitz 17b und dritte Schlitz 17c stellt in Verbindung mit jeweils der ersten kreisrunden Öffnung 18a, der zweiten kreisrunden Öffnung 18b und der dritten kreisrunden Öffnung 18c eine Federwirkung der Justierlamellen 16a, 16b und 16c zur Verfügung, wenn diese unter Anwendung der Justierschrauben 34 in Richtung der Durchgangsbohrung 14 ausgelenkt werden, um erfindungsgemäß ein Werkstück kraftschlüssig in der Öffnung 14 für die weitere Bearbeitung zu fixieren. Werden die Justierschrauben 34 nach erfolgter Bearbeitung des Werkstücks entspannt, das heißt in den Radialbohrungen 32 durch entsprechendes Drehen nach außen in Richtung weg von den Justierlamellen 16a bis 16c und vom eingespannten Werkstück bewegt, bewirkt die beschrieben Federwirkung ein Zurückstellen der Justierlamellen 16a bis 16c und eine Öffnung der Durchgangsbohrung auf den Maximaldurchmesser, wodurch das zuvor eingespannte Werkstück leicht entnommen werden kann.

Hinsichtlich der Aufnahme eines zu bearbeitenden Werkstücks in das Spannelement 10 wirken die drei konzentrisch äquidistant um die Achse der Durchgangsbohrung 14 angeordneten Justierlamellen 16a bis 16c nach dem bekannten Prinzip der Dreipunktlagerung und allen damit verbundenen Vorteilen bei der Ausrichtung und Fixierung eines Werkstücks. Durch die unabhängig voneinander justierbaren Justierschrauben 34 und die dementsprechend unabhängig voneinander justierbaren Justierlamellen 16a bis 16c kann nunmehr auch das zu bearbeitende Werkstück in dem zuvor mit Hilfe der Justierschrauben 28 und 56 justierten Spannelement 10 exakt positioniert werden. Die durch die drei (es können auch vier oder fünf Justierlamellen verwendet werden) Justierlamellen 16a, 16b, 16c zur Verfügung gestellte Dreipunktlagerung und die Möglichkeit der voneinander unabhängigen Justierung der Justierlamellen 16a bis 16c mit Hilfe der Justierschrauben 34 ermöglicht nicht nur eine sehr genaue Ausrichtung und exakte Positionierung des zu bearbeitenden Werkstücks, sondern ist auch dazu geeignet, gegebenenfalls vorhanden Formtoleranzen im Bereich der Einspannfläche eines rotationssymmetrischen Werkstücks so auszugleichen, dass trotzdem eine exakte Positionierung des Werkstücks erreicht werden kann.

Fig.3 zeigt oben links eine Draufsicht auf das erfindungsgemäße Spannelement 10 mit der Bezeichnung einer Schnittebene A-A, deren zugehörige Schnittbilddarstellung in Fig.3 unten dargestellt ist. Weiterhin zeigt Fig.3 oben rechts eine Seitenansicht des Spannelements 10. Die oben links in Fig.3 dargestellte Draufsicht auf das Spannelement 10 umfasst dabei wiederum die sechs Justierbohrungen 26, von denen zwei exakt in der markierten Schnittebene A-A liegen und daher in der Schnittbilddarstellung in Fig. 3 unten im Längsschnitt zu sehen sind. Weiterhin umfasst die Draufsicht auf das erfindungsgemäße Spannelement 10 gemäß Fig.3 drei aus Fig.1 und Fig.2 bekannte Befestigungsbohrungen 20. Die Draufsicht auf das Spannelement 10 umfasst ebenfalls die drei Justierlamellen 16a, 16b und 16c sowie die bekannten drei Radialbohrungen 32.

Das in Fig.3 unten dargestellte Schnittbild entlang der Schnittebene A-A umfasst die Durchgangsöffnung 14, zwei Justierbohrungen 26 und eine Justierlamelle 16b, wobei alle Elemente in Längsrichtung geschnitten sind. Daraus ist zu ersehen, dass die Justierbohrungen 26 streng parallel ausgerichtet sind zur Drehachse X der Rotierspindel 60 und damit zur Achse der Durchgangsbohrung 14. Dabei sind die Justierbohrungen 26 als Durchgangsbohrungen ausgeführt, so dass die in diesen Justierbohrungen 26 aufgenommen Justierschrauben 28 durch das Spannelement 10 hindurch reichen können und sich erfindungsgemäß in zusammen gebautem Zustand auf der Fläche der Rotierspindel 60 abstützen können, wodurch mit Hilfe dieser unabhängig voneinander justierbaren Justierschrauben 28 der Planlauf des Spannelements 10 justiert werden kann. Weiterhin umfasst die Schnittbilddarstellung gemäß Fig.3 eine erste Stirnseite 12 und eine zweite Stirnseite 13 des erfindungsgemäßen Spannelements 10, die beide bevorzugt plan ausgebildet sind.

Die Abbildung oben rechts in Fig.3 zeigt eine Seitenansicht des Spannelements 10, aus der eine der drei Radialbohrungen 32 zur Aufnahme der Justierschrauben 34 zu ersehen ist, mit denen, wie oben beschrieben, die Justierlamellen 16a bis 16c justiert werden können.

Fig.4 zeigt eine Draufsicht auf eine andere Ausführungsform des erfindungsgemäßen Spannelements 10. Die Ausführungsform gemäß Fig.4 unterscheidet sich dabei von der Ausführungsform gemäß der Figuren 1 bis 3 durch die Ausgestaltung der Justierlamellen. Dabei bilden die erste Justierlamelle 16a, die zweite Justierlamelle 16b und die dritte Justierlamelle 16c zum Grundkörper des Spannelements 10 wie zuvor wiederum jeweils entsprechende Schlitze aus, die von kreisrunden Öffnungen 18a, 18b, 18c ausgehen und auf diese Weise eine Federwirkung der Justierlamellen 16a, 16b und 16c zur Verfügung stellen, wenn diese unter Anwendung der Justierschrauben 34 in Richtung der Durchgangsbohrung 14 ausgelenkt werden. Dabei sind die Justierlamellen gegenüber der Ausführungsform gemäß den Fig.1, 2 und 3 so ausgestaltet, dass eine wesentlich kleinere Durchgangsbohrung 14 verbleibt, wodurch sich diese Ausführungsform der Justierlamellen 16a, 16b, 16c und des Spannelementes 10 zur Aufnahme von rotationssymmetrischen Werkstücken mit wesentlich geringeren Außendurchmessern eignet als dies bei der Ausführungsform der Justierlamellen gemäß den Fig.1, 2 und 3 der Fall war. Zusätzlich weisen die erste Justierlamelle 16a, die zweite Justierlamelle 16b und die dritte Justierlamelle 16c gemäß Fig.4 im Querschnitt gesehen an ihrem jeweiligen distalen Ende jeweils eine zur Achse X des Zylindrischen Grundkörpers 10 hervorspringende erste Nase 36a, eine zweite Nase 36b und eine dritte Nase 36c auf. Dabei sind diese Nasen 36a bis 36c so ausgeformt, dass analog zu den Justierlamellen 16a bis 16c gemäß der Ausführungsform in Fig.1, 2 und 3 die Aufnahme und das Einspannen des Werkstücks mit möglichst großer Kontaktfläche zwischen Justierlamellen und Werkstück erfolgen kann, um zuverlässig eine kraftschlüssige Verbindung beim Einspannen herzustellen.

Hinsichtlich der Aufnahme eines zu bearbeitenden Werkstücks mit nunmehr verhältnismäßig geringem Umfang in das Spannelement 10 wirken die drei konzentrisch äquidistant um die Achse der Durchgangsbohrung 14 angeordneten Justierlamellen 16a bis 16c zusammen mit den entsprechenden Nasen 36a bis 36c wiederum nach dem bekannten Prinzip der Dreipunktlagerung. Durch die unabhängig voneinander justierbaren Justierschrauben 34 und die dementsprechend unabhängig voneinander justierbaren Justierlamellen 16a bis 16c kann auch ein zu bearbeitende Werkstück mit geringem Durchmesser, beispielsweise im Bereich von Millimetern oder darunter, über die Nasen 36a bis 36c in dem zuvor mit Hilfe der Justierschrauben 28 und 56 justierten Spannelement 10 exakt positioniert werden. Die durch die drei Justierlamellen 16a, 16b, 16c über die Nasen 36a bis 36c zur Verfügung gestellte Dreipunktlagerung und die Möglichkeit der voneinander unabhängigen Justierung der Justierlamellen 16a bis 16c und dadurch der Nasen 36a bis 36c mit Hilfe der Justierschrauben 34 ermöglicht nicht nur eine sehr genaue Ausrichtung und exakte Positionierung des zu bearbeitenden Werkstücks mit geringem Durchmesser, sondern ist auch dazu geeignet, gegebenenfalls vorhandene Formtoleranzen im Bereich der Einspannfläche eines rotationssymmetrischen Werkstücks so auszugleichen, dass trotzdem eine exakte Positionierung dieses Werkstücks erreicht werden kann.

Es ist offensichtlich, dass durch weitere Ausführungsformen der Justierlamellen 16a, 16b, 16c in Verbindung mit entsprechend unterschiedlich ausgeführten Nasen 36a, 36b, 36c präzise einstellbare Spannvorrichtungen für eine Vielzahl unterschiedlicher Werkstückdurchmesser zur Verfügung gestellt werden können, die alle oben genannten Vorteile bei der exakten Positionierung der Werkstücke bezüglich der Ausrichtung auf der Achse X der Rotierspindel 60 aufweisen und gleichzeitig zuverlässig eine kraftschlüssige Verbindung zwischen Spannelement und Werkstück herstellen.

Fig.5 zeigt eine Draufsicht auf das im Aufnahmeteller 50 fixierte Spannelement 10 und die Ausrichtung einer Schnittebene B-B. Dabei verläuft diese Schnittebene B-B unter anderem durch eine der Radialbohrungen 32, durch die Durchgangsbohrung 14, eine der Befestigungsbohrungen 20, durch zwei der Radialbohrungen 54 (ersichtlich beim Vergleich der Lage der Schnittebene B-B mit dem Schnittbild aus Fig.2), durch den Aufnahmeteller 50 und die Rotierspindel 60. Die entsprechende Darstellung im Schnittbild entlang Schnittebene B-B zeigt Fig.6.

Dabei umfasst Fig.6 die Rotierspindel 60, deren Rotationsachse X idealer Weise exakt mit der Achse der Durchgangsbohrung 14 übereinstimmt für den Fall, dass das Spannelement 10 hinsichtlich Planlauf und Rundlauf exakt justiert und fixiert ist. Weiterhin umfasst Fig.6 den Aufnahmeteller 50.
Fig.6 umfasst ebenfalles zwei Radialbohrungen 54 zur Aufnahme von Justierschrauben 56, eine Radialbohrung 32 zur Aufnahme einer Justierschraube 34 und eine Befestigungsbohrung 20 zur Aufnahme eine Befestigungsschraube 22.

Wie bereits weiter oben ausführlich beschrieben, wird über die insgesamt acht Justierschrauben 56 in den acht Radialbohrungen 54 der Rundlauf des Spannelements 10 in Bezug auf die Achse X der Rotierspindel 60 justiert. Trotz der insgesamt acht Justierschrauben 56 kann im fertig eingebauten und justierten Zustand nicht davon ausgegangen werden, dass die acht Justierschrauben 56 etwaige in axialer Richtung entlang der Achse X auf das Spannelement einwirkende Kräfte ohne ein unerwünschte Veränderung der Lage und damit der Positionierung des Spannelements 10 aufnehmen können. Zur sicheren und dauerhaften Fixierung im Aufnahmeteller 50 wird das Spannelement 10 daher mit drei Befestigungsschrauben 22 mit dem Aufnahmeteller 50 verbunden. Eine dieser Befestigungsschrauben 22 ist mit zugehöriger Befestigungsbohrung 20 im Längsschnitt unten rechts aus Fig.6 zu ersehen. Obwohl die Stirnseiten 12 und 13 (siehe Fig.3) des Spannelements 10 vorzugsweise plan ausgebildet sind, ist auch in Verbindung mit einer planen Auflagefläche auf der Rotierspindel 10 keine zuverlässig exakte Ausrichtung des Spannelements 10 und damit die geforderte Genauigkeit des Planlaufs des Spannelements 10 sichergestellt. Die erfindungsgemäße Vorrichtung weist daher, wie weiter oben bereits kurz beschrieben, zusätzliche Justierschrauben 28 (hier in diesem Schnitt B-B nicht ersichtlich) auf, mit deren Hilfe der Planlauf wunschgemäß justiert werden kann (siehe dazu Erläuterung zu den nachfolgenden Figuren 7 und 8) bevor das Spannelement 10 mit Hilfe der drei Befestigungsschrauben 22 in der durch Justierung der Justierschrauben 56 und 28 erzielten Position in dem Aufnahmeteller 50 fixiert wird.

Weiterhin ersichtlich aus Fig.6 ist eine der Radialbohrungen 32 zur Aufnahme von Justierschrauben 34 im Spannelement 10, über die das Werkstück durch entsprechende Justierung der drei Justierlamellen mit Hilfe der drei Justierschrauben 34 im Spannelement 10 eingespannt wird. In allen Ausführungsformen, sowohl zur Aufnahme von rotationssymmetrischen Werkstücken mit größeren wie auch sehr geringen Durchmessern sind die erfindungsgemäßen Justierlamellen 16a, 16b, 16c dabei entsprechend der Werkstückgröße so ausgebildet, dass diese das Werkstück über eine möglichst großen Kontaktfläche fixieren und einspannen, wodurch eine sichere Kraftübertragung auf das Werkstück, beispielsweise bei der Rotation der Maschine gewährleistet ist, ohne etwa unerwünschte Verformungen an der Oberfläche des Werkstücks im Bereich der Kontaktflächen der Justierlamellen zu bewirken, wie dies bei mehr punktuellen Kontaktflächen anderer Spannsysteme insbesondere dann der Fall sein kann, wenn die Werkstücke aus relativ weichem Material bestehen.

Fig.7 zeigt wie Fig.5 eine Draufsicht auf das im Aufnahmeteller 50 fixierte Spannelement 10 und die Ausrichtung einer Schnittebene C-C. Dabei verläuft diese Schnittebene C-C unter anderem durch zwei der Justierbohrungen 26, durch die Durchgangsbohrung 14, durch zwei der Radialbohrungen 54 (ersichtlich beim Vergleich der Lage der Schnittebene C-C mit dem Schnittbild aus Fig.2), durch den Aufnahmeteller 50 und die Rotierspindel 60. Die entsprechende Darstellung im Schnittbild entlang Schnittebene C-C zeigt Fig.8.

Dabei umfasst Fig.8 der Rotierspindel 60, deren Rotationsachse X idealer Weise exakt mit der Achse der Durchgangsbohrung 14 übereinstimmt für den Fall, dass das Spannelement 10 hinsichtlich Planlauf und Rundlauf exakt justiert und fixiert ist. Weiterhin umfasst Fig.6 die Darstellung im Längsschnitt des Aufnahmetellers 50 der topfförmig auf der Rotierspindel 60 fixiert ist. Fig.8 umfasst ebenfalls zwei von insgesamt acht Radialbohrungen 54 Im Aufnahmeteller 50 zur Aufnahme von Justierschrauben 56 und zwei von insgesamt sechs Justierbohrungen 26 zur Aufnahme von Justierschrauben 28.

Aus Fig.8 ist zu ersehen, dass die Justierbohrungen 26 streng parallel ausgerichtet sind zur Drehachse X der Rotierspindel 60 und damit zur Achse der Durchgangsbohrung 14. Dabei sind diese Justierbohrungen 26 als Durchgangsbohrungen ausgeführt, so dass die darin aufgenommen Justierschrauben 28 durch das Spannelement 10 hindurchreichen und sich erfindungsgemäß in dem gezeigten zusammengebautem Zustand auf der Fläche des Aufnahmetellers 50 abstützen können, wodurch mit Hilfe dieser insgesamt sechs unabhängig voneinander justierbaren Justierschrauben 28 der Planlauf des Spannelements 10 justiert werden kann.

Wie bereits weiter oben erwähnt, wird die Justierung des Planlaufs über die Justierschrauben 28 typischerweise in Verbindung mit der Justierung des Rundlaufs über die Justierschrauben 56, gegebenenfalls in sich mehrmals abwechselnden Arbeitsschritten von Justierung des Rundlaufs und des Planlaufs durchgeführt werden, um letztendlich zu den erwünschten Genauigkeiten für Planlauf und Rundlauf zu gelangen.

In Verbindung mit der beschriebenen Flexibilität bei der Aufnahme und Fixierung von rotationssymmetrischen Werkstücken durch die erfindungsgemäßen Ausführungsformen der Justierlamellen sind beliebige Kombinationen von Justierungen des Spannelements und des Werkstücks realisierbar, die auf Grund der gegebenen Freiheitsgrade jederzeit eine zuverlässige, exakte und kraftschlüssige Aufnahme von Werkstücken zur Verfügung stellen. Da die Aufnahme für das Werkstück im Spannelement und die Aufnahme für das Spannelement an der Maschine so ausgestaltet sind, dass sich sowohl die erwünschte präzise Ausrichtung des Werkstücks wie auch die erwünschte präzise Ausrichtung des Spannelements durch geeignete Vorrichtungen zur Justierung an diesem Spannelement und an der Aufnahme für dieses Spannelement ausführen lassen, ohne dass das Spannelement selbst und seine Aufnahme an der Maschine beziehungsweise die Vorrichtungen zur Justierung hinsichtlich der Fertigungstoleranzen mit hohem konstruktiven und fertigungstechnischem Aufwand gefertigt sein müssen, wodurch sich eine gegenüber dem Stand der Technik kostengünstigere Herstellung hoch präziser Spannvorrichtungen erreichen lässt.

Bezugszeichenliste
- 10: Spannelement, Grundkörper
- 12: Stirnseite
- 13: Stirnseite
- 14: Durchgangsbohrung
- 16a: Justierlamelle
- 16b: Justierlamelle
- 16c: Justierlamelle
- 17a: Schlitze
- 17b: Schlitze
- 17c: Schlitze
- 18a: Öffnung
- 18b: Öffnung
- 18c: Öffnung
- 20: Befestigungsbohrungen
- 22: Befestigungsschrauben
- 26: Justierbohrungen
- 28: Justierschrauben
- 32: Radialbohrung
- 34: Justierschrauben
- 36a: Nase
- 36b: Nase
- 36c: Nase
- 50: Aufnahmeteller
- 52: topfförmige Ausnehmung
- 54: Radialbohrungen
- 56: Justierschrauben
- 60: Welle Rotierspindel

- X: Achse
- A-A: Schnitt
- B-B: Schnitt
- C-C: SchnittPatentansprüche

## Patentansprüche

1. Justierbares Spannelement mit einem zylindrischen Grundkörper (10), welcher zumindest an einer seiner zwei Stirnseiten (12, 13) plan ausgebildet ist und welcher mittig angeordnete, verstellbare Justierlamellen (16a, 16b, 16c) aufweist, die um eine zentrische Durchgangsbohrung (14) des Grundkörpers (10) herum angeordnet sind, sowie axial durch den Grundkörper (10) verlaufende Befestigungsbohrungen (20) zur Aufnahme von Befestigungsschrauben (22) sowie Justierbohrungen (26) zur Aufnahme von Justierschrauben (28), durch welche das plane Aufliegen des Grundkörpers (10) und damit ein Planlauf bei Rotation des Grundkörpers (10) einstellbar ist.

2. Justierbares Spannelement nach Anspruch 1,
**dadurch gekennzeichnet, dass** der zylindrische Grundkörper (10) auf einem Aufnahmeteller (50) sitzt.

3. Justierbares Spannelement nach Anspruch 2,
**dadurch gekennzeichnet, dass** sich die Justierschrauben (28) auf dem Aufnahmeteller (50) verstellbar abstützen.

4. Justierbares Spannelement nach einem der Ansprüche 1 bis 3,
**dadurch gekennzeichnet, dass** drei oder vier Justierlamellen (16a, 16b, 16c) vorgesehen sind.

5. Justierbares Spannelement nach einem der Ansprüche 1 bis 4,
**dadurch gekennzeichnet, dass** der zylindrische Grundkörper (10) radiale Bohrungen (32) aufweist, welche auf die Außenseite der Justierlamellen (16a, 16b, 16c) gerichtet sind zur Aufnahme von weiteren Justierschrauben (34).

6. Justierbares Spannelement nach einem der Ansprüche 1 bis 5,
**dadurch gekennzeichnet, dass** die Justierlamellen (16a, 16b, 16c) im Querschnitt gesehen ringsegmentförmig ausgebildet sind.

7. Justierbares Spannelement nach einem der Ansprüche 1 bis 6,
**dadurch gekennzeichnet, dass** die Justierlamellen (16a, 16b, 16c) im Querschnitt gesehen an ihren jeweiligen distalen Enden mit zur Achse (X) des zylindrischen Grundkörpers (10) hervorspringenden Nasen (36a, 36b, 36c) versehen sind.

8. Justierbares Spannelement nach einem der Ansprüche 1 bis 7,
**dadurch gekennzeichnet, dass** Schlitze (17a, 17b, 17c) im Grundkörper (10) im Bereich der Justierlamellen (16a, 16b, 16c) vorgesehen sind.

9. Justierbares Spannelement nach Anspruch 8,
**dadurch gekennzeichnet, dass** die Schlitze (17a, 17b, 17c) an kreisrunden Öffnungen (18a, 18b, 18c) ausgehen.

10. Justierbares Spannelement nach einem der Ansprüche 1 bis 9,
**dadurch gekennzeichnet, dass** das Spannelement (10) in einer topförmigen Ausnehmung (52) des Aufnahmetellers (50) sitzt und der Aufnahmeteller (50) Radialbohrungen (54) aufweist, durch welche Justierschrauben (56) zum Einstellen des Rundlaufes des Spannelementes (10) vorgesehen sind.

11. Justierbares Spannelement nach einem der Ansprüche 1 bis 10,
**gekennzeichnet** zur Aufnahme von Werkstücken für Draht- und/oder Senkerodiermaschinen.

12. Justierbares Spannelement nach einem der Ansprüche 1 bis 10
**gekennzeichnet** zur Rundlaufjustage von rotierenden oder drehenden Werkstücken.

## Claims

1. Adjustable tensioning element with a cylindrical base (10), which is formed planar on at least one of its two front sides (12, 13) and which has adjustable adjustment slats (16a, 16b, 16c) in the middle, that are arranged around a centric through-hole (14) in the base (10), as well as fastening bore holes (20) for the reception of fastening screws (22) running in the axial direction through the base (10) as well as adjustment bore holes (26) for the reception of adjustment screws (28), by means of which the planar seating of the base (10) and with it a planar manner during the rotation of the base (10) can be adjusted.

2. Adjustable tensioning element according to claim 1, **characterized in that** the cylindrical base (10) sits on a receiving plate (50).

3. Adjustable tensioning element according to claim 2, **characterized in that** the adjustment screws (28) rest adjustably on the receiving plate (50).

4. Adjustable tensioning element according to anyone of claims 1 to 3, **characterized in that** three or four adjustment slats (16a, 16b, 16c) are provided.

5. Adjustable tensioning element according to anyone of claims 1 to 4, **characterized in that** the cylindrical base (10) has radial bore holes (32), which are aligned to the exterior of the adjustment slats (16a, 16b, 16c) for the reception of further adjustment screws (34).

6. Adjustable tensioning element according to anyone of claims 1 to 5, **characterized in that** the adjustment slats (16a, 16b, 16c), seen in the cross section, are in the form of ring-segments.

7. Adjustable tensioning element according to anyone of claims 1 to 6, **characterized in that** the adjustment slats (16a, 16b, 16c), seen in the cross section, are provided at their respective distal ends with lugs (36a, 36b, 36c) extending towards the axis (X) of the cylindrical base (10).

8. Adjustable tensioning element according to anyone of claims 1 to 7. **characterized in that** slots (17a, 17b, 17c) are provided in the base (10) within the vicinity of the adjustment slats (16a, 16b, 16c).

9. Adjustable tensioning element according to claim 8, **characterized in that** the slots (17a, 17b, 17c) come out at circular openings (18a, 18b, 18c).

10. Adjustable tensioning element according to anyone of claim 1 to 9, **characterized in that** the tensioning element (10) sits in a pot-shaped recess (52) of the receiving plate (50) and the receiving plate (50) has radial holes (54), through which adjustment screws (56) are provided for the radial run-out adjustment of the tensioning element (10).

11. Adjustable tensioning element according to anyone of claims I to 10, **characterized** for the reception of the work-pieces for wire-eroding and/or ram edm machines.

12. Adjustable tensioning element according to anyone of claims 1 to 10, **characterized** for the radial run-out adjustment of rotating or turning work-pieces.

## Revendications

1. Elément de serrage ajustable ayant un corps de base (10) cylindrique, dont au moins l'une des deux faces frontales (12, 13) est plane et comporte des lamelles d'ajustage (16a, 16b, 16c), réglables en position centrale, et disposées autour d'un perçage (14) central traversant le corps de base (10), ainsi que des perçages de fixation (20) traversant axialement le corps de base (10) pour recevoir des vis de fixation (22) ainsi que des perçages d'ajustage (26) pour recevoir des vis d'ajustage (28) qui permettent de régler l'appui plan du corps de base (10) et ainsi le mouvement plan lors d'une rotation du corps de base (10).

2. Elément de serrage ajustable selon la revendication 1,
**caractérisé en ce que**
le corps de base cylindrique (10) repose sur un plateau de réception (50).

3. Elément de serrage ajustable selon la revendication 2,
**caractérisé en ce que**
les vis d'ajustage (28) s'appuient de manière réglable sur le plateau de réception (50).

4. Elément de serrage ajustable selon les revendications 1 à 3,
**caractérisé par**
trois ou quatre lamelles d'ajustage (16a, 16b, 16c).

5. Elément de serrage ajustable selon les revendications 1 à 4,
**caractérisé en ce que**
le corps de base cylindrique (10) comporte des perçages radiaux (32) dirigés vers le côté extérieur des lamelles d'ajustage (16a, 16b, 16c) pour recevoir d'autres vis d'ajustage (34).

6. Elément de serrage ajustable selon les revendications 1 à 5,
**caractérisé en ce que**
les lamelles d'ajustage (16a, 16b, 16c) ont en section une forme de segment annulaire.

7. Elément de serrage ajustable selon les revendications 1 à 6,
**caractérisé en ce que**
les lamelles d'ajustage (16a, 16b, 16c) ont en section, au niveau de leurs extrémités distales respectives, des becs (36a, 36b, 36c) venant en saillie par rapport à l'axe (X) du corps de base cylindrique (10).

8. Elément de serrage ajustable selon les revendications 1 à 7,
**caractérisé par**
des fentes (17a, 17b, 17c) prévues dans le corps de base (10) au niveau des lamelles d'ajustage (16a, 16b, 16c).

9. Elément de serrage ajustable selon la revendication 8,
**caractérisé en ce que**
les fentes (17a, 17b, 17c) dans le corps de base (10) se terminent au niveau d'orifices circulaires (18a, 18b, 18c).

10. Elément de serrage ajustable selon les revendications 1 à 9,
**caractérisé en ce que**
l'élément de serrage (10) est logé dans une cavité (52) en forme de pot du plateau de réception (50) et le plateau de réception (50) comporte des perçages radiaux (54) permettant aux vis d'ajustage (56) de régler le fonctionnement correct de l'élément de serrage (10).

11. Elément de serrage ajustable selon les revendications 1 à 10,
**caractérisé en ce qu'**
il est prévu pour recevoir des pièces de machines à éroder, filaires et/ou par plongée.

12. Elément de serrage ajustable selon les revendications 1 à 10,
**caractérisé en ce qu'**
il est destiné à l'ajustage du bon fonctionnement de pièces rotatives ou que l'on fait tourner.
